# EUROPEAN PATENT APPLICATION

(11) **EP 3 582 196 A1**
(43) Date of publication of application: **18.12.2019**
(21) Application number: 18176981.1
(22) Date of filing: 11.06.2018
(51) Int. Cl.: G08B 13/06, G08B 13/08, G08B 13/16, G08B 29/18, G06N 3/02

(54) **SHOCK SENSOR IN AN ALARM SYSTEM**

(71) Applicant: Verisure Sàrl, 1290 Versoix (CH)
(72) Inventor: HANSSON, Magnus, 211 28 Malmö (SE)
(74) Representative: Hansson Thyresson AB

(57) **Abstract**

An alarm system for monitoring a site, such as a home, wherein the alarm comprises a vibration sensor mountable on a door or a window or a wall,
wherein the vibration sensor is configured to be able to pick up vibrations from the door or window producing a vibration signal, and
wherein the system is configured to detect possible break-in vibration, and the system is configured to detect possible break-in vibrations by analysing the vibration signal with the aid of artificial intelligence technique(s).

## Description

### TECHNICAL FIELD

The present invention refers to the field of alarm systems. In particular, it refers to a shock sensor of such an alarm system.

### PRIOR ART

EP2698774 discloses a security system and a method and a device for controlling the security system in a building wherein the security system comprises at least one wireless alarm detector and a gateway having communication means for communicating with said at least one alarm detector and a remote alarm receiving centre.

### BACKGROUND

Alarm systems as the one disclosed in EP2698774 is as a rule provided with perimeter sensors such as detectors for detecting opening of doors, or vibrations caused by break-in attempts. It is in the interest of the customer and the producer that a sensor performs at a certain level. The market experiences emerging standards for different aspects of a security system, such as sensor performance. It is a goal of many manufacturers of security equipment to get their products certified according to one or more standards. One such standard is EN 50130 which specifies desired performance of a shock sensor for an alarm system.

### SUMMARY OF THE INVENTION

In accordance with a first aspect of the invention there is provided an alarm system for monitoring a site, such as a home, wherein the alarm comprises a vibration sensor mountable on a door or a window or a wall, wherein the vibration sensor is configured to pick up vibrations from the door or window producing a vibration signal, and wherein the system is configured to detect possible break-in vibrations by analyzing the vibration signal with the aid of artificial intelligence technique(s).

The use of artificial intelligence techniques, in particular artificial neural networks provide advantageous performance, as disclosed below.

In accordance with a second aspect of the invention there is provided a vibration sensor unit for an alarm system sensor mountable on a door or a window or a wall, the vibration sensor unit comprising a vibration sensor configured to pick up vibrations from the door or window or wall and producing a vibration signal, wherein the vibration sensor unit is configured to detect possible break-in vibrations, and wherein the vibration sensor unit is configured to detect possible break-in vibrations by analysing the vibration signal with the aid of artificial intelligence technique(s)

In accordance with a third aspect of the invention there is provided a method for configuring a vibration sensor unit, comprising an accelerometer and a programmable processing unit 320, to detect shock vibrations consistent with a break-in attempt, the method comprising the following steps:
- providing, in a test rig, a monitored object, such as a window, door or wall;
- providing the monitored object with the vibration sensor unit;
- creating and running a plurality of well-defined test cases during which, the monitored object is impacted by an object and accelerometer data are recorded;
- the test cases defining conditions at the impact, such as type of impact object, location and intensity or energy of impact;
- designing to each test case a desired outcome, i.e., the desired classification, and further comprising:
- feeding a convolutional neural network with input data, i.e., recorded test cases and expected outcome, one test case at a time;
- using a convolutional neural network training tool, involving an iterative process, repeatedly feeding the input data to the convolutional neural network, until performance, i.e., classification sensitivity and specificity reach acceptable levels.

As a result, a more reliable and sensitive shock sensor is provided.

The disclosed system and method can be used in a wireless communications system comprising a plurality of wireless nodes including a first gateway, one or more wireless peripheral devices and, in some installations, one or more further gateways. The wireless communications system can form part of a home alarm system installation that comprises at least one wireless alarm detector and at least one gateway. The wireless alarm detector will signal alarm events to the gateway. If any of the devices or nodes fail - some action is taken, such as signaling to the gateway and notifying the home owner or triggering a tamper alarm. Signaling of alarm events and tamper alarms can comprise generation of an alarm signal in premises where the alarm system installation is installed and/or forwarding an alarm signal to a remote central monitoring station where further steps for managing the situation can be taken.

A home alarm system installation in general can use or employ any type of wireless system comprising a plurality of peripheral wireless nodes, such as an intruder alarm, and a central unit. Specifically, it can be a security system having a plurality of wireless detectors, sensitive to the displacement of windows and doors, and to presence or passage of persons and objects, and sensitive to smoke or water leakage, the detectors communicating with a central unit such as a gateway using wireless communication. Security and alarm systems may comprise a control panel. The system may comprise a gateway that is connected to a remote central monitoring station, either by a telephone line or by a wireless telecommunications system such as GSM or other radio frequency systems. The connection can also be through the internet. The control panel can be provided with an input device or be activated and controlled by a control device such as a keypad which can be a wireless remote device.

### BRIEF DESCRIPTION OF THE DRAWINGS

Non-limiting embodiments of the invention will now be described with reference to the figures in which:
- Fig. 1: is a schematic view of an installation of a home alarm system installation,
- Fig. 2: is a schematic diagram showing a typical home alarm system installation including two gateways,
- Fig. 3: is a block diagram of a vibration sensor unit for an alarm system.
- Fig. 4: shows a simplified representation of a network processing of a vibration signal, and
- Fig. 5: shows a block diagram of an architecture for a preferred convolutional neural network with additional blocks for training marked.

### DETAILED DESCRIPTION

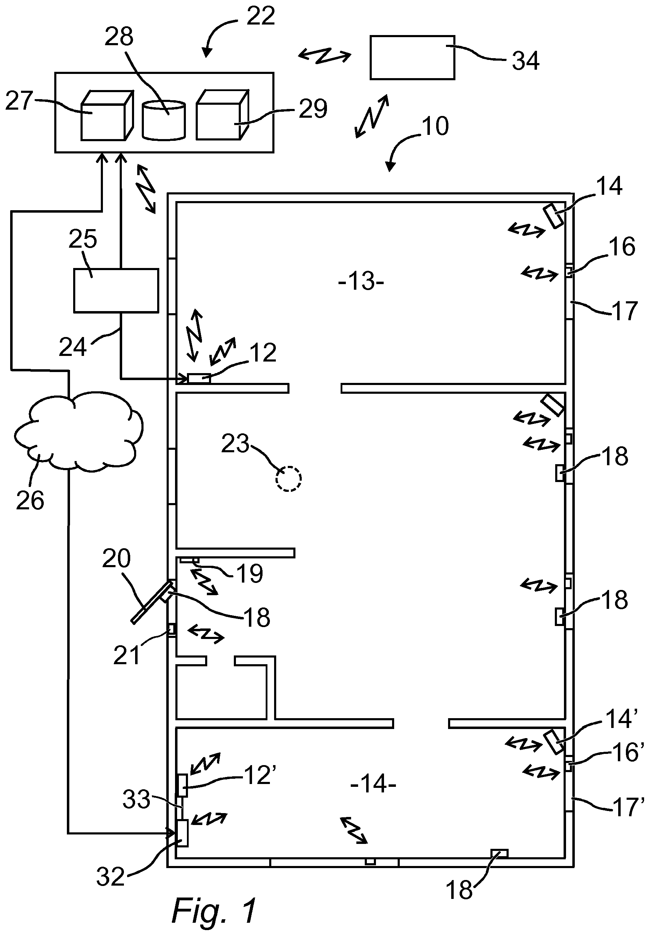

Fig. 1 shows a home alarm system installation in a building 10. The home alarm system installation comprises a plurality of wireless peripheral nodes including wireless peripheral devices, a first gateway 12 and a second gateway 12'. The second gateway 12' is mains powered. One wireless peripheral node is a first infrared detector 14 mounted in the corner of a first room 13 close to the ceiling. The first infrared detector 14 has a sensing area that covers the first gateway 12 also disposed in the first room. A camera can be included in the infrared detector 14 or it may form a separate wireless peripheral device. During alarm events, the camera transmits video signals or other images to the gateway 12, 12'. The infrared detector 14 operates in a conventional manner to detect presence and movements of objects emitting infrared radiation.

A first perimeter alarm detector 16 is mounted at a window 17 in the same room. The perimeter alarm detector can operate in a conventional manner to detect when a door or a window is opened. In various installations the perimeter alarm detector comprises a magnetic sensor that will detect when a magnet attached to the door or window is moved.

A second gateway 12' is arranged in a second room 15 separated from the first room 13 where the first gateway 12 is arranged. A second infrared detector 14' is mounted in the same room as the second gateway 12' to cover the second gateway within its sensing area and a second perimeter alarm detector 16' is mounted at a second window 17' in the same room. A keypad 19 is mounted close to a front door 20 of the building 10. The keypad 19 is used by an operator of the alarm system to arm and to disarm the alarm system. The keypad 19 also is a wireless peripheral node. The front door 20 is covered by a third perimeter alarm detector 21. Another type of wireless peripheral device is a smoke detector 23 mounted in the ceiling of the building. In various installations a plurality of smoke detectors 23 are arranged throughout the building 10 to ensure that fire can be detected at an early stage. A vibration sensor unit 18 is mounted on selected windows 17, doors 20 and walls of the building.

Depending on different circumstances the first gateway 12 and the second gateway 12' are connected to a remote central monitoring station 22 either through a wired connection 24 or through a wireless connection such as GSM or a similar digital cellular network 34. The connection to the remote central monitoring station 22 can also be through the internet 26. In the installation shown in Fig. 1, internet connection is provided through a wireless router 32 that is connected to internet by fiber, cable or Digital Subscriber Line, such as ADSL or in any similar way. In the installation shown in Fig. 1 the second gateway 12' is connected by wire 33 to the wireless router 32. The wired connection 24 can be part of a public switched telephone network 25. In various installations the remote central monitoring station 22 comprises an interface module 27, a database 28 and a web server 29. The database 28 stores installation and application data relating to the installation including all wireless network nodes and alarm settings.

By placing gateways strategically within a building, it is possible to guarantee that every peripheral node has an adequate RF link with at least one gateway. As long as each gateway can communicate directly with at least one other gateway and directly or indirectly with all of the other gateways, the installation will function properly. To achieve full redundancy the installation should include enough gateways for every peripheral node to be able to communicate with at least two gateways.

An installation such as the alarm system shown in Fig. 1 holds a large amount of dynamic state information, such as arm state, alarm status, peripheral battery status, etc. in a total system state information dataset. Similar information is stored also in other types of home wireless systems. Each gateway or controller continuously receives inputs from different authenticated sources such as peripheral nodes, a remote central monitoring station (RCMS), adjacent systems, etc. that affects a distributed state of the application or system. In various installations, a second gateway can utilize the RF communication link of another gateway for tunneling messages to an RCMS. For example, if the second gateway up-link to RCMS is very slow or unreachable, or has a higher cost, another gateway up-link can be utilized.

The alarm system can be armed in different ways and into different alarm system states, such as "Disarmed", "Armed Home" and "Armed Away". If the system is set to "Disarmed" it will not alarm to perimeter or interior detectors. Still, fire detectors, other gas detectors, flooding events, power break down events and similar detectors normally will be armed also in the "Disarmed" state. If the alarm system is set to a first armed state referred to as "Armed Home" the alarm system will generate an alarm at the occurrence of a breach of a first group of selected detectors such as perimeter detectors and selected interior detectors, but not to a breach of the interior detectors in general. If the system is set to a second armed state referred to as "Armed Away" it will alarm to a breach of the perimeter or interior detectors and normally to all types of detectors.

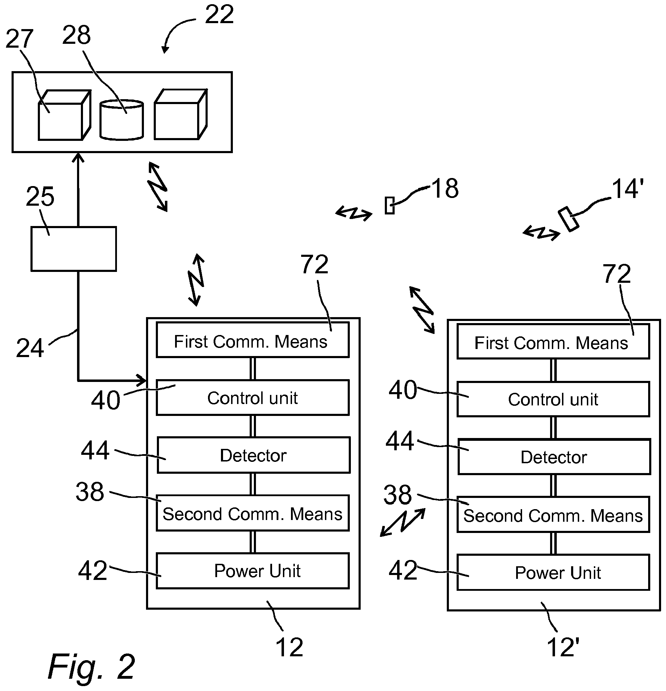

A basic installation is shown in Fig. 2. This installation relates to a home alarm system comprising a first gateway 12, a second gateway 12' and at least one wireless peripheral device, such as an infrared detector 14 or a vibration sensor unit 18. The first gateway 12, the second gateway 12' and the infrared detector 14 all communicate using radio communication. At least one gateway is repeatedly communicating with the remote central monitoring station 22 as disclosed above.

The first and the second gateways 12, 12' comprise first communication units 36 and second communication units 38. First communication units 36 is used for communicating with remote central monitoring station 22 either through a wired connection 24 or through a wireless connection such as GSM or a similar digital cellular network. The connection to the remote central monitoring station 22 can also be through a wired connection, such as a public switched telephone network or the internet. Video and other images will be transmitted to the remote central monitoring station 22.

The second communication units 38 is mainly used for communication within the installation between gateways and between gateways and peripheral nodes. Each gateway is controlled by a control unit 40 and comprise a power unit 42, normally a battery. At least one gateway can be provided with a detector 44 continuously monitoring radio communication received in the gateway. When detector 44 detects intentional or unintentional radio disturbance measures in the radio communication system an alert signal is transferred to the control unit 40. An alarm signal then can be generated in the gateway and forwarded to the remote central monitoring station 22 in an appropriate way.

### Vibration Sensor Unit

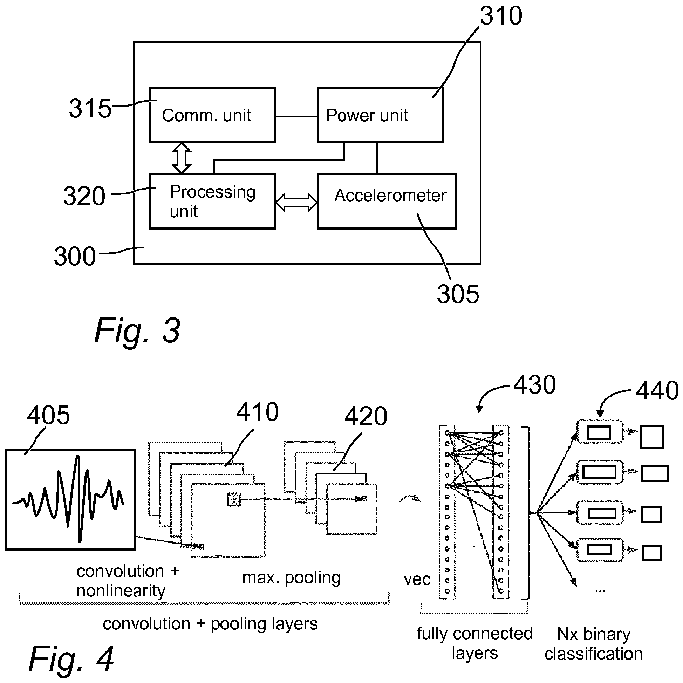

Fig. 3 is a block diagram of a vibration sensor unit 300 for an alarm system. The vibration sensor unit 300 comprises a vibration sensor 305 such as an accelerometer 305 connected to a processing unit 320. The processing unit 320 can be a microcontroller circuit. The processing unit 320 is configured to receive a vibration signal from the accelerometer 305 and to further classify the vibration signal into one of two or more classes, one class corresponding to a possible break-in attempt. Further, the vibration sensor unit 300 is provided with a power unit 310 and a wireless communications unit 315 to wirelessly communicate with and to forward the result of the classification to a central unit, a.k.a. a gateway 12 of the alarm system. The vibration sensor unit 300 might typically be mounted, e.g.
a. In the corner of a glass pane of a window
b. On a wooden / plastic / metal window frame
c. On the inside surface of a wooden / plastic front door
d. On a concrete wall adjacent a window or a door

The processing unit 320 is configured to receive short vibration signals from the accelerometer 305, typically in the millisecond to second range. The signal is a sampled signal, obtained at a sample frequency in the interval of 200 Hz to 20 kHz. Recording of a sample sequence is triggered when the vibration signal of the accelerometer 305 exceeds a predefined threshold level. Tests have shown that an advantageous sample frequency is in the interval of 800 to 6400 Hz, and particularly in the interval of 1400 to 1800 Hz, such as 1600 Hz, which offers a good trade-off between number of samples that are needed to distinguish different classes of vibrations, and the need to limit the number of samples to get a manageable number of inputs for the classification software to handle. In various embodiments the vibration signal may be a one- or three-axis accelerometer signal.

The processing unit 320 is configured to perform classification with the aid of artificial neural network software. Now referring to Fig. 4, an artificial neural network is realized by software, and may preferably be stored and run in the processing unit 320 of the shock sensor unit 300. The artificial neural network is designed to have a number of input nodes organized in an input layer, a number of hidden nodes organized in a hidden layer and a number of output nodes organized in an output layer. Each artificial neural network node is provided with a number of input weights that weights each input to that node.

Specifically, a certain type of artificial neural networks referred to as Convolutional Neural Networks the inventor have tested and found well suited to be adapted to distinguish between vibrations consistent with a break-in attempt, and vibrations, e.g. like rain, or hail falling towards a window or door, not consistent with a break-in attempt.

### Method of determining artificial neural network weights

The artificial neural network (ANN) is provided with input nodes, hidden nodes and output nodes, the nodes being connected to each other according to a topology, each node having an input weight associated to each of its inputs. Each node having multiple inputs.

The topology and the node input weights are determined off line using a training database of a number of recorded example shock vibration signals and example set-up data, and with the aid of an off-line computer via a machine learning process also known as a training process, wherein input parameters to the input nodes of the ANN comprise:
- shock vibration signal samples,
and wherein the following parameters are used by the training process to train the network to achieve the expected outcome:
- expected outcome (class).

Thus, a training database is generated including a number of examples of accelerometer vibration signals originating from impacts on different objects of different materials and with different impact objects.

**Table 1. List of training examples**

| Sample sequence no | Accelerometer mounted on | Position of accelerometer | Impact energy |
|---|---|---|---|
| 1 | Window glass | Upper left | 0,14 J |
| 2 | Window glass | Upper left | 0,5 J |
| 3 | Wooden door | Upper left | 0,14 J |
| 4 | Wooden door | Upper left | 0,5 J |
| 5 | Concrete wall | Upper left | 0,14 J |
| 6 | Concrete wall | Upper left | 0,5 J |
| 7 | Concrete wall | Upper right | 0,14 J |
| ... | | | |
| ... | | | |

In various further embodiments the training database may include one or more of the following input parameters:
- indicating the material on which the accelerometer is mounted;
- indicating the type of impact object used to produce the shock;
- indication of the position of the accelerometer within the monitored object.
- indication of distance between impact site and sensor
- indication of change in acoustic impedance between material at the impact site and that of sensor mounting site if different

### Convolutional Neural Network

Fig. 4 shows a simplified representation of a network processing of a vibration signal. The input data 405, such as a signal comprising 3x64 samples is convoluted by a number of filters to produce a number of feature maps 410. The feature maps serve as input to a pooling layer. An output from the pooling layer is new feature maps 420, which in turn constitute an input to fully connected layers 430. The fully connected layers then provide the output 440 from the total convolutional neural network.

### Example

A three-axis accelerometer is used. Recording is triggered when a momentary absolute value of an accelerometer vector signal exceeds a threshold value. A sampling frequency is 1600 Hz. 3x64 values are recorded, including 64 values for each of x-, y-, z-channel. The recording is then saved. The recording is used as 2-dimensional input data to a pre-trained convolutional neural network. The convolutional neural network comprises two fully connected layers and three convolution layers interspersed with five activation layers and three pooling layers. The fully connected layer has a depth of 3 layers, a width of one, and a length of 32.

### Method of pre-traininq the convolutional neural network

The convolutional neural network is pre-trained. The parameters resulting from pre-training can be downloaded as software to the smart shock sensor. This can be done at manufacturing or when unit is already installed with customer. Pre-training is done in a number of steps:
- in a test rig, a monitored object, such as a window, is provided with a shock sensor with the accelerometer;
- a number of well-defined test cases are performed during which accelerometer data are recorded;
- the test cases define circumstances regarding the impact, such as type of impact object, location and intensity or energy of impact;
- each test case is assigned a desired outcome, i.e., the desired classification.

Further steps comprise:
- feeding a convolutional neural network with input data, i.e., recorded test accelerometer data and expected outcome, one test case at a time; and
- using a convolutional neural network training tool, involving an iterative process, repeatedly feeding the input data to the convolutional neural network, and adjusting the network until performance, i.e., classification sensitivity and specificity reaches acceptable levels.

The convolutional neural network training tool preferably involves a backpropagation training algorithm. In various embodiments the backpropagation algorithm is used for training the network. The shock vibration signal examples, i.e., test cases, can include examples where the accelerometer is mounted on different materials, including glass, wood and concrete.

In advantageous embodiments the artificial neural network emulated by the processor is a convolutional neural network. Parameters for performing the so-called convolution and the so-called pooling strongly influence the behaviour of the convolutional neural network. In an off-line training process, the training examples are used to set the parameters and tune the network parameters.

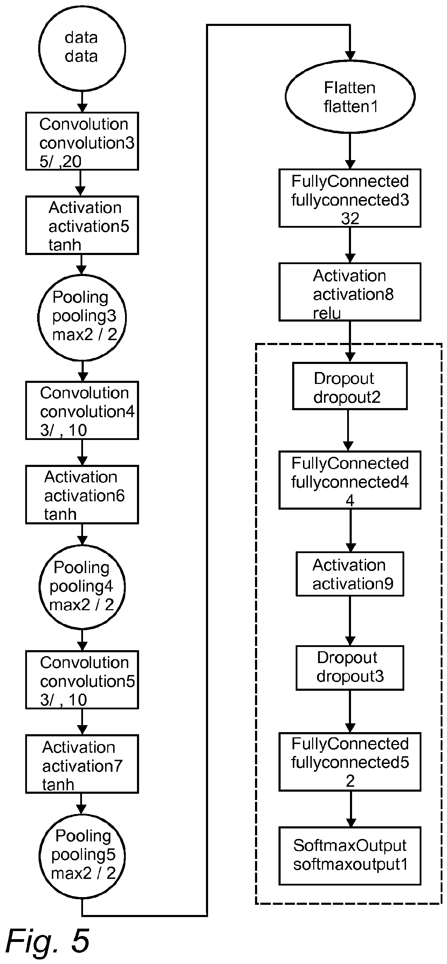

The convolutional neural network comprises a fully connected layer, a convolutional layer and a pooling layer. In various embodiments and even more advantageously the convolutional neural network comprises two fully connected layers and three convolution layers interspersed with five activation layers and three pooling layers, see Fig. 5. During training additional components such as so-called dropouts may be used, these components are enclosed by a dashed line in Fig. 5. Dropout is this context is a method of avoiding over-fitting. It comprises ignoring units (i.e. neurons) during the training phase of certain set of neurons which is chosen at random. By "ignoring", is meant that these units are not considered during a particular forward or backward pass. In other words, at each training stage, individual nodes are either dropped out of the net with probability 1-p or kept with probability p, so that a reduced network is left.

In alternate embodiments there are provided an alarm system for monitoring a site, such as a home, comprising a vibration sensor mountable on a door or a window or a wall, wherein the vibration sensor is configured to pick up vibrations from the door or window or wall producing a vibration signal, and wherein the alarm system is configured to detect possible break-in vibrations, and wherein the system is adapted to analyse candidate vibration signals to distinguish vibrations corresponding to a break in from those that do not correspond to a break in, the analysis including determining one or more characteristics of a candidate vibration signal and comparing the one or more determined characteristics to corresponding characteristics of a library of vibration signals, where the library signals are each known to correspond or not to corresponding to a break in.

## Claims

1. An alarm system for monitoring a site, such as a home, comprising
a vibration sensor mountable on a door or a window or a wall;
wherein the vibration sensor is configured to pick up vibrations from the door or window or wall producing a vibration signal, and
wherein the alarm system is configured to detect possible break-in vibrations **characterised in that**
the system is configured to detect possible break-in vibrations by analysing the vibration signal with the aid of artificial intelligence technique(s).

2. The alarm system according to claim 1 wherein the artificial intelligence technique used comprises machine learning.

3. The alarm system according to claim 1 or 2 wherein the artificial intelligence technique used is artificial neural network(s).

4. The alarm system according to claim 1 to 3 wherein the vibration sensor is an accelerometer.

5. The alarm system according to claim 3 wherein the artificial neural network is the result of an off-line training process involving the provision of examples of vibration signals and provision of the desired output.

6. The alarm system according to claim 2,
wherein the accelerometer is a three-axis accelerometer.

7. The alarm system according to claim 6, wherein
the alarm system is configured to detect a break-in attempt by classifying a shock vibration sensed by the accelerometer into one of two or more predefined classes, and
wherein the shock vibration is converted by the accelerometer to a shock vibration signal, the shock vibration signal being a three-dimensional accelerometer signal and wherein the classifying is performed by
a processor configured to emulate an artificial neural network having input nodes, hidden nodes and output nodes, the nodes being connected to each other according to a topology, and wherein each node having an input weight associated to each of its inputs,
wherein the topology and the node input weights has been determined off line using a training database of a number of recorded example shock vibration signals and example set-up data, and with the aid of an off-line computer via a machine learning process.

8. The alarm system according to claim 7 wherein input parameters to the input nodes of the artificial neural network comprises:
- shock vibration signal examples, including such generated by impact of a hammer representing impact energy of a first predetermined level or less, and a second predetermined level or more;
- expected outcome (class), wherein examples representing impacts of a first predetermined level or less is associated with an outcome of "no alarm" or similar, and wherein examples representing impacts of a second predetermined level or more is associated with an outcome of "alarm" or similar;
and wherein the artificial neural network (ANN) has been trained to classify the input into the predefined classes.

9. The alarm system according to claim 7, wherein the first predetermined level is about 0.14 Joule.

10. The alarm system according to claim 7, wherein the second predetermined level is about 0.5 Joule.

11. The alarm system according to any of the preceding claims wherein the artificial neural network is a convolutional neural network.

12. The alarm system according to claim 11 wherein the convolutional neural network comprises a convolutional layer and a pooling layer.

13. The alarm system according to claim 11 wherein the convolutional neural network comprises a fully connected layer and three convolution layers interspersed with five activation layers and three pooling layers.

14. The alarm system according to claim 13 dependent on claim 8, wherein shock vibration signal examples are obtained when the accelerometer is mounted on different materials, including glass, wood and concrete.

15. A vibration sensor unit (300) for an alarm system mountable on a door or a window or a wall;
the vibration sensor unit comprises a vibration sensor configured to pick up vibrations from the door or window or wall and producing a vibration signal, and
wherein the vibration sensor unit (300) is configured to detect possible break-in vibrations
**characterised in that**
the vibration sensor unit is configured to detect possible break-in vibrations by analysing the vibration signal with the aid of artificial intelligence technique(s).

16. The vibration sensor unit (300) according to claim 15, wherein the vibration sensor is an accelerometer (305) and wherein the vibration sensor unit (300) is configured to detect a break-in attempt by classifying a shock vibration sensed by the accelerometer into one of two or more predefined classes, and wherein the shock vibration is converted by the accelerometer to a shock vibration signal, the shock vibration signal being a three-dimensional accelerometer signal and wherein the classifying is performed by
a programmable processing unit (320) configured to emulate an artificial neural network having input nodes, hidden nodes and output nodes, the nodes being connected to each other according to a topology, and wherein each node having an input weight associated to each of its inputs, and
wherein the topology and the node input weights have been determined off line using a training database of a number of recorded example shock vibration signals and example set-up data, and with the aid of an off-line computer via a machine learning process.

17. The vibration sensor unit (300) according to claim 16, wherein the artificial neural network is a convolutional neural network.

18. A method for configuring a vibration sensor unit (300), comprising an accelerometer (305) and a programmable processing unit (320) detecting shock vibrations consistent with a break-in attempt, the method comprising the following steps:
- providing, in a test rig, a monitored object, such as a window, door or wall;
- providing the monitored object with the vibration sensor unit;
- creating and running a plurality of well-defined test cases during which, the monitored object is impacted by an object and accelerometer data are recorded;
- the test cases defining conditions at the impact, such as type of impact object, location and intensity or energy of impact.
- designing to each test case a desired outcome, i.e., the desired classification, and further comprising:
- feeding a convolutional neural network with input data, i.e., recorded test cases and expected outcome, one test case at a time;
- using a convolutional neural network training tool, involving an iterative process, repeatedly feeding the input data to the convolutional neural network, until performance, i.e., classification sensitivity and specificity reach acceptable levels.

19. The method according to claim 18 wherein the convolutional neural network training involves use of a backpropagation training algorithm.

20. The method according to claim 18 wherein the convolutional neural network training involves use of dropouts.

21. The alarm system according to claim 1, **characterised in that** the system is adapted to analyse candidate vibration signals to distinguish vibrations corresponding to a break in from those that do not correspond to a break in, the analysis including determining one or more characteristics of a candidate vibration signal and comparing the one or more determined characteristics to corresponding characteristics of a library of vibration signals, where the library signals are each known to correspond or not to corresponding to a break in.
